# EUROPEAN PATENT APPLICATION

(11) **EP 0 897 830 A2**
(43) Date of publication of application: **24.02.1999**
(21) Application number: 98114367.0
(22) Date of filing: 30.07.1998
(51) Int. Cl.: B60Q 3/02

(54) **Control of lights inside vehicles**

(30) Priority: 22.08.1997 GB 9717783
(71) Applicant: LTI Limited, Coventry CV5 8JJ (GB)
(72) Inventor: Osmond, Edward, Solihull, Birmingham B92 OBS (GB)
(74) Representative: Cookson, Barbara Elizabeth

(57) **Abstract**

An apparatus for controlling an internal courtesy light (20) in a taxi equipped with a taxi-meter (24) for calculating a fare that is required to be paid by a customer at the end of a journey. The taxi-meter is adapted to provide a signal to control the courtesy light (20) to switch once the meter is stopped and to remain illuminated until the meter is re-set in readiness for the next hiring.

## Description

### Technical Field

The present invention relates to the control of a courtesy light in taxi vehicles equipped with a taxi-meter for determining the fare that is required to be paid by a passenger at the end of a journey.

### Background of the Invention

For many years, taxi vehicles have been fitted with taxi-meters for the purpose of calculating the fare a passenger should pay at the end of a journey. The fitting of a taxi-meter in a licensed taxi is a requirement of the taxi regulatory body, the Public Carriage Office.

Taxi vehicles have also been fitted with an internal courtesy light, in the front driver's compartment, which is manually controlled by the driver. In conditions of darkness the internal courtesy light therefore facilitates the driver and passenger during payment of the fare. Conventionally, payment is made by the passenger on the nearside of the vehicle, this is the side opposite that at which the driver sits, either through a window or hatch in a dividing bulkhead between a driver's compartment and the passenger's compartment or through a nearside door in the driver's compartment, or through the window of such door.

The problem is that both the passenger and the taxi driver need to be able to see what they are doing when conditions are dark. An internal courtesy light cannot be used continuously as this might impede driving visibility and result in unsafe driving. The light therefore only needs to be in operation at the end of the journey when the passenger must pay the fare. At present this requires the driver to manually operate the light which may easily be forgotten.

### Summary of the Invention

In accordance with the present invention an apparatus for controlling a courtesy light of a vehicle fitted with a taxi-meter, provided with means for starting, stopping and re-setting and being adapted to provide a signal which is present when the meter is in stop mode and continuing until it is re-set, and control means for receiving said signal and controlling the state of the courtesy light in response thereto.

Preferably the courtesy light is in a driver's compartment of the vehicle at a position adjacent to a nearside door in order to illuminate an area in the region of the nearside door.

This invention provides complete automatic operation of the courtesy light with maximum convenience for the passenger and driver while maintaining the safest driving conditions. The courtesy light is only operated when needed between stopping and resetting the taxi-meter.

In a preferred embodiment, the courtesy light is connected in circuit with the vehicle's driving lights so as to operate only when the driving lights are powered.

### Brief Description of the Drawings

In order that the invention may be well understood an embodiment thereof will now be described, by way of example only, with reference to the accompanying diagrammatic drawings, in which:
- Figure 1: shows a taxi cab in accordance with the invention; and

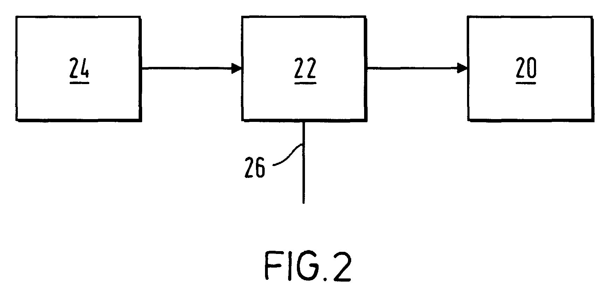

- Figure 2: is a block diagram showing one form of control circuit schematically.

### Description of a Preferred Embodiment

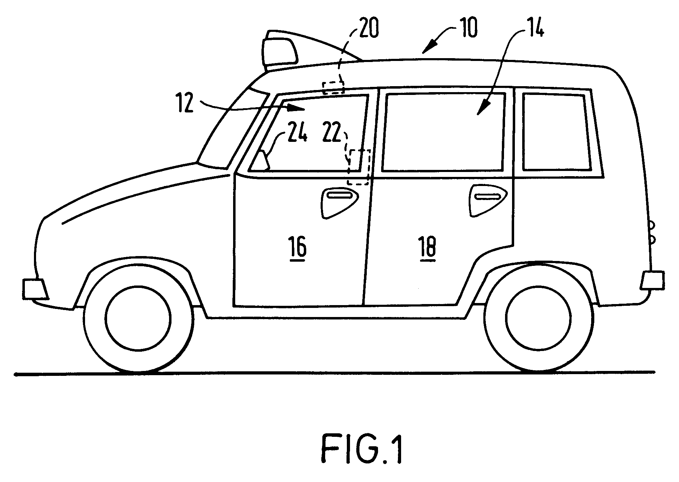

A taxi 10 as illustrated in Figure 1 typically comprises of forward compartment 12 for the driver and a rearward compartment 14 for passengers. The two compartments are separated by an internal bulkhead (not shown). The forward compartment 12 is provided with respective doors 16 on opposite sides of the vehicle and the rear compartment 14 is likewise provided with respective doors 18 on opposite sides of the vehicle.

An internal courtesy light 20 is provided within the driver's compartment 12 above the nearside door 16. The light 20 is powered under the control of a control circuit 22 which in turn is supplied by a signal from a taxi-meter 24. The control circuit 22 is a simple switching means such as a relay.

At the end of a journey, the taxi-meter calculates the fare the passenger must pay by measuring the distance travelled by the vehicle during the journey and the time the journey takes. The final chargeable figure is derived in accordance with a stored program. The meter measures the distance the vehicle has travelled by reading pulses from a measuring apparatus connected to the final drive of the gearbox of the vehicle.

The taxi-meter has a control to start metering, a control to stop metering and a control to reset the meter. This invention requires a taxi-meter that has been adapted to provide a signal when in the stop mode which continues to be present until the meter is reset. This signal is transferred via an electrical terminal on the meter to the switching means 22, which switches power to the courtesy light 20.

A signal 26 is supplied to the control circuit 22 from the vehicle's driving light circuit to inhibit operation of the switching means when the driving lights are not powered. This prevents the courtesy light operating unnecessarily during daylight hours. Alternatively the power supply may be connected to the switching means 22 and courtesy light in parallel with the driving lights.

At the end of the journey, the driver puts the taxi-meter 24 into the stop mode in order to display the total fare for the journey. While in the stop mode the courtesy light 20 illuminates the area in the vicinity of the nearside door 16 of the driver's compartment 12 to facilitate payment of the fare by the passenger if the driving lights are powered. Once payment is complete the driver resets the meter, which automatically switches the courtesy light off.

It will be appreciated that the apparatus described can readily be adapted for use with any design of taxi-meter. The necessary modification to provide the required signal will depend on the design.

The positioning of the courtesy light depends on the preferred payment location and may be inside or outside the vehicle. If desired the apparatus may operate two courtesy lights one adjacent each of the typical payment positions.

## Claims

1. An apparatus for controlling a courtesy light of a vehicle fitted with a taxi-meter (24) provided with means for starting, stopping and re-setting and being adapted to provide a signal which is present when the meter is in a stop mode and continuing until it is re-set, and control means (22) for receiving said signal and controlling the state of the courtesy light (20) in response thereto.

2. An apparatus as claimed in claim 1, where the courtesy light (20) is in a driver's compartment of the vehicle at a position adjacent to a nearside door (12) in order to illuminate an area in the region of the nearside door.

3. An apparatus as claimed in claim 1 or 2, wherein the control means (22) comprises an electronic circuit with a means for receiving said signal from the taxi-meter (24), and feeding it to a switching means (22) that switches power to the light (20).

4. An apparatus as claimed in any one of the preceding claims, wherein the control circuit is connected in circuit with the vehicle's driving lights so that internal light (20) only operates when the driving lights are powered.

5. An apparatus as claimed in any one of the preceding claims, wherein the light is inside the vehicle.

6. An apparatus for controlling a courtesy light of a vehicle substantially as herein described with reference to Figures 1 and 2 of the accompanying drawings.
